# EUROPÄISCHE PATENTSCHRIFT

(11) **EP 3 671 264 B1**
(45) Veröffentlichungstag und Bekanntmachung des Hinweises auf die Patenterteilung: **16.02.2022**
(21) Anmeldenummer: 19212773.6
(22) Anmeldetag: 02.12.2019
(51) Int. Cl.: G01S 7/486, G01S 17/10, G01S 17/42, G01S 17/88, G01S 7/497

(54) **SENSOR UND VERFAHREN ZUR ERFASSUNG EINES OBJEKTS**
SENSOR AND METHOD FOR DETECTING AN OBJECT
CAPTEUR ET PROCÉDÉ DE DÉTECTION D'UN OBJET

(30) Priorität: 21.12.2018 DE 102018133281
(43) Veröffentlichungstag der Anmeldung: 24.06.2020
(73) Patentinhaber: SICK AG, 79183 Waldkirch (DE)
(72) Erfinder: Engler, Michael, 79350 Sexau (DE); Krämer, Joachim, 79189 Bad Krozingen (DE)

(56) Entgegenhaltungen:
- EP-A1- 2 541 273
- EP-A1- 3 124 996
- EP-A1- 3 237 926
- EP-A1- 3 327 462
- EP-A2- 1 795 913
- DE-A1-102016 113 131
- DE-A1-102017 202 957
- US-A1- 2013 229 297

## Beschreibung

Die Erfindung betrifft einen Sensor, insbesondere einen Laserscanner, sowie ein Verfahren zur Erfassung eines Objektes in einem Überwachungsbereich nach dem Oberbegriff von Anspruch 1 beziehungsweise 11.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit, indem der

Laserscanner oder indem das Objekt relativ zu dem Laserscanner befördert wird. So können auch dreidimensionale Konturen ausgemessen werden.

Laserscanner werden nicht nur für allgemeine Messaufgaben, sondern auch in der Sicherheitstechnik beziehungsweise dem Personenschutz zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Sicherheitslaserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten in der Regel pulsbasiert.

Sicherheitslaserscanner müssen besonders zuverlässig arbeiten und deshalb hohe Sicherheitsanforderungen erfüllen, beispielsweise die Norm EN 13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile. Letzteres betrifft insbesondere eine Frontscheibe des Sicherheitslaserscanners, die herkömmlich durch über den Umfang verteilte, lichtschrankenartige Detektoren auf ihre Transmissionsfähigkeit geprüft wird. Die Anforderungen an die Selbstdiagnose sind je nach Gefährdungspotential unterschiedlich hoch, was beispielsweise durch sogenannte Performancelevel ausgedrückt wird.

Ein Sicherheitslaserscanner soll auch Objekte mit sehr geringer Remission detektieren, und zwar über seine gesamte Reichweite. Dafür bedarf es einer hohen Empfindlichkeit, wobei sich die Mindestempfindlichkeit über eine minimale Signalstärke definieren lässt, ab welcher ein Objekt als potentiell sicherheitskritisch angesehen wird und deshalb bei dessen Erfassung in einem Schutzfeld eine Absicherung erfolgt. Die hohe Empfindlichkeit schlägt sich auf die Verfügbarkeit nieder: Je empfindlicher ein Sicherheitslaserscanner ist, desto leichter und häufiger kann er durch äußere Einflüsse wie Staub, Insekten oder dergleichen gestört werden, die dann ungewollte Abschaltungen auslösen. Dies soll in der Praxis wegen an sich unnötiger Stillstandzeiten der überwachten Anlage nach Möglichkeit vermieden werden. Herkömmlich werden außerdem noch Reserven vorgehalten, um Driften durch Bauteilalterung, etwa des Sendelasers, oder reduzierte Empfangssignale etwa durch eine verschmutzte Frontscheibe auszugleichen. Solange solche Driften aber gar nicht aufgetreten sind, erhöht das die Empfindlichkeit an sich unnötig und verschärft die Verfügbarkeitsproblematik.

Die Empfangsleistung für ein Objekt mit bestimmten Remissionseigenschaften ist keine Konstante, sondern weist eine Abstandsabhängigkeit auf. Das wird durch die sogenannte Signaldynamik beschrieben, welche die relative Empfangsleistung in Abhängigkeit vom Abstand des angetasteten Objekts bei ansonsten konstanten Objekteigenschaften angibt.

Die Signaldynamik lässt sich näherungsweise als Überlagerung zweier gegenläufiger Effekte verstehen. Laserscanner verwenden üblicherweise eine Sendelinse, die das Sendelicht kollimiert, sowie eine Empfangslinse, die möglichst viel Licht einsammelt. Nun nimmt zum einen die Signalstärke quadratisch mit der Entfernung ab. Das schwächste Empfangssignal wird daher gewöhnlich in maximaler Reichweite empfangen, und dort beispielsweise wird die Signaldynamik, die ja eine relative Größe ist, auf den Wert Eins gesetzt. Zum anderen wird der Laserlichtfleck nur aus dem Unendlichen optimal auf den Lichtempfänger abgebildet. Bei kürzeren Abständen wandert der Lichtfleck zunehmend aus dem Lichtempfänger heraus, wenn Sendelinse und Empfangslinse biaxial nebeneinander angeordnet sind, beziehungsweise überstrahlt den Lichtempfänger in koaxialer Anordnung. In beiden Fällen wird das empfangene Licht zum Nahbereich hin nur teilweise in ein Empfangssignal gewandelt. Folglich wird die Signaldynamik, die in maximaler Reichweite den kleinsten Wert annimmt, zu kürzeren Abständen hin wegen der quadratisch anwachsenden Signalstärke zunächst größer, fällt dann aber im Nahbereich wieder ab, weil nur noch ein kleiner Teil des Lichts auf den Lichtempfänger trifft. Deshalb entsteht typischerweise in etwa bei einen Drittel bis der Hälfte der maximalen Reichweite ein Maximum der Signaldynamik.

Im Stand der Technik wird versucht, die Signaldynamik durch Optikdesign abzuflachen. Typischerweise ist die Optik eine Mehrzonenlinse, die für den Nah- und Fernbereich und möglicherweise mittlere Abstandsbereiche jeweils einen eigenen Linsenbereich vorsieht. Die EP 2 378 309 A1 zeigt einen alternativen Ansatz mit einem Mehrzonenspiegel. Durch die mehreren Zonen kann die Signaldynamik auch kompliziertere Gestalt annehmen als ein einfaches, zu beiden Seiten abfallendes Maximum. Mehrzonenoptiken sind aufwändig und außerdem nur eine Teillösung. Optimal wäre eine flache Signaldynamik, die überall den Wert Eins hat, denn damit wäre die Signaldynamik faktisch ausgeschaltet. In der Praxis erreicht auch die optisch korrigierte Signaldynamik immer noch einen maximalen Wert von mindestens Vier.

Die Empfindlichkeitseinstellung herkömmlicher Laserscanner nimmt auf die Signaldynamik keine Rücksicht, soweit sie optisch nicht korrigiert werden konnte, sondern wird auf den schlechtesten Fall ausgelegt, nämlich ein Objekt in einer Entfernung entsprechend der maximalen Reichweite. Das hat den Nachteil, dass der Laserscanner an anderer Stelle unnötig empfindlich wird, vor allem im Bereich der maximalen Signaldynamik, d.h. bei mittleren Abständen, wo relativ gesehen die meiste Energie vom Objekt zurücckommt.

Die DE 10 2016 113 131 A1 offenbart einen Entfernungstaster oder Laserscanner, der seine Empfindlichkeit anhand eines zu erwartenden Abstands oder eines Signal-zu-Rausch-Verhältnisses dynamisch anpasst. Dabei wird aber nicht die Signaldynamik berücksichtigt, sondern nur die quadratische Energieabnahme mit dem Abstand. Die Empfindlichkeit nimmt dementsprechend zu größeren Abständen hin nur zu, was der tatsächlichen Situation nicht gerecht wird und weder Sicherheit garantiert noch das Verfügbarkeitsproblem behebt.

Die EP 3 124 996 A1 offenbart einen Laserscanner für den Einsatz im Nebel. Wenn das Empfangssignal zu stark wird, schaltet der Laserscanner in einen Nebelmodus, in dem die Schwelle für die Objektdetektion im Nahbereich heraufgesetzt wird.

Aus der EP 3 327 462 A1 ist ein optoelektronischer Sensor mit Dynamikanpassung durch gezielte Dejustage im optischen Empfangspfad bekannt. Die Dejustage verändert zur Empfindlichkeitsanpassung den Anteil des Lichtflecks, der auf den Lichtempfänger trifft.

In der EP 1 795 913 A2 setzt ein Laserscanner ein zusätzliches Lichtempfangselement neben dem eigentlichen Lichtempfänger ein, das schon vorab einen Empfangspegel für den nächsten Scanwinkel erfassen soll. Dann wird für den neuen Scanwinkel eine Verstärkung in Abhängigkeit vom jetzigen Empfangspegel und dem Messergebnis des zusätzlichen Lichtempfangselements eingestellt.

Die EP 3 237 926 A1 offenbart eine scannende Distanzmessvorrichtung nach einem pulsbasierten Lichtlaufzeitverfahren. Dabei wird eine dynamische optische oder elektronische Dämpfung des Empfangssignals gemäß einer zeitabhängigen und in einigen Ausführungsformen auch winkelabhängigen Funktion vorgenommen. Diese Funktion wird beispielsweise in einer vorangehenden Kalibration für eine bestimmte Distanzmessvorrichtung bestimmt. Das derart gedämpfte Empfangssignal wird dann mit einer Schwelle bewertet, um den Empfangspuls zu finden.

Aus der EP 2 541 273 A1 ist ein Laserscanner mit Nebelerkennung bekannt. Das Empfangssignal wird analog in ein Nebelsignal mit den niederfrequenten Anteilen und ein eigentliches Messsignal mit den höherfrequenten Anteilen einschließlich der Messpulse aufgeteilt. Das Nebelsignal wird durch Korrelation mit der Empfangsdynamik bewertet.

Es ist daher Aufgabe der Erfindung, eine robustere Objekterfassung für einen gattungsgemäßen Sensor anzugeben.

Diese Aufgabe wird durch einen Sensor, insbesondere einen Laserscanner, sowie ein Verfahren zur Erfassung eines Objektes in einem Überwachungsbereich nach Anspruch 1 beziehungsweise 11 gelöst. Der Sensor sendet ein Lichtsignal aus und empfängt das von einem angetasteten Objekt remittierte Lichtsignal wieder als Signalecho. Mit Hilfe einer beweglichen Ablenkeinheit, also beispielsweise eines rotierenden Optikkopfes mit Lichtsender und Lichtempfänger oder eines rotierenden Drehspiegels, wird periodisch der Überwachungsbereich abgetastet. Eine Steuer- und Auswertungseinheit bestimmt die Lichtlaufzeit und daraus den Abstand zu dem angetasteten Objekt. Vorzugsweise wird pulsbasiert gemessen, dazu mit dem Lichtstrahl ein Sendepuls ausgesandt und aus dem remittierten Lichtstrahl ein entsprechender Empfangspuls erzeugt.

Dabei findet eine Korrektur der Signaldynamik statt. Die Signaldynamik wurde einleitend erläutert und beschreibt den Effekt, dass unter sonst gleichen Bedingungen, insbesondere ein und dasselbe gemessene Objekt bei sonst konstanten Sensoreinstellungen und Umgebungseinflüssen, in unterschiedlichen Abständen einen unterschiedlichen Empfangspegel erzeugt. Eine mögliche Definition der Signaldynamik ist die relative Empfangsleistung in Abhängigkeit vom Abstand des jeweils angetasteten oder erfassten Objekts. Die Korrektur der Signaldynamik erfolgt herkömmlich über die Optik.

Die Erfindung geht von dem Grundgedanken aus, die Signaldynamik durch Anpassung der Empfindlichkeit zu korrigieren. Die herkömmlichen optischen Korrekturen wie Mehrzonenlinsen und dergleichen werden durch elektronische Korrektur beziehungsweise Ansteuerung und/oder Auswertung ersetzt. Alternativ ist auch denkbar, eine optische Korrektur beizubehalten und zu ergänzen, also die nach optischer Korrektur verbleibende Signaldynamik durch Anpassung der Empfindlichkeit weiter zu korrigieren.

Die Erfindung hat den Vorteil, dass eine besonders einfache und genaue Korrektur der Signaldynamik erreicht wird. Die Signaldynamik wird auf elektronischem Weg nivelliert. Dafür genügen je nach Ausführungsform reine Softwaremaßnahmen. Die aufwändige optische Korrektur der Signaldynamik wird ersetzt oder zumindest so ergänzt, dass daran geringere Anforderungen gestellt beziehungsweise bessere Ergebnisse erzielt werden. Es wird verhindert, dass der Sensor für manche Abstandbereiche unnötig empfindlich reagiert. Damit ist ein insgesamt deutlich robusterer Betrieb möglich, und die Störeffekte etwa durch Partikel in der Luft und an der Frontscheibe werden erheblich reduziert. So steigt die Verfügbarkeit, ohne dadurch die Zuverlässigkeit zu beeinträchtigen.

Die Steuer- und Auswertungseinheit ist bevorzugt dafür ausgebildet, das Objekt durch eine Bewertung des Empfangssignals mit einem Schwellwert zu erfassen, wobei der Schwellwert anhand der Signaldynamik abstandsabhängig angepasst wird. Dabei kann es sich um eine echte Schwellenoperation mit einer oder mehreren Schwellen handeln, um einen Empfangspuls zu lokalisieren, sei es mit einem analogen Schwellendetektor oder in einem digitalisierten Empfangssignal, aber auch um Schwellenkriterien, mit denen ein digitalisiertes Empfangssignal ausgewertet wird. Herkömmlich ist ein derartiger Schwellwert konstant und wegen der dort minimalen Empfindlichkeit für die maximale Reichweite ausgelegt. Nach dieser erfindungsgemäßen Ausführungsform wird der Schwellwert durch die Anpassung an die Signaldynamik abstandsabhängig. Anders ausgedrückt werden Detektionsschwellen autonom an die Signaldynamik angepasst.

Die Steuer- und Auswertungseinheit ist bevorzugt dafür ausgebildet, das Empfangssignal zu digitalisieren und anhand der Signaldynamik zu korrigieren. Für die Digitalisierung ist beispielsweise mindestens ein Komparator oder ein A/D-Wandler vorgesehen. Die jeweiligen Abtastwerte werden entfernungsabhängig anhand der Signaldynamik korrigiert. Jeder Abtastwert entspricht ja einer Lichtlaufzeit und damit einem Abstand, so dass der jeweils relevante Bereich der Signaldynamik zugeordnet werden kann. Für die weitere Auswertung ist damit der Einfluss der Signaldynamik kompensiert.

Die Steuer- und Auswertungseinheit ist bevorzugt dafür ausgebildet, die Anpassung der Empfindlichkeit durch Anpassungen der Auswertung vorzunehmen. In dieser Ausführungsform findet die Anpassung in der Auswertung statt, vorzugsweise nach Digitalisierung des Empfangssignals. Es handelt sich dann um eine kostengünstig umsetzbare Softwarelösung, wobei das im weiten Sinne zu verstehen sein kann und auch Implementierungen auf digitalen Bausteinen wie einem FPGA (Field Programmable Gate Array) oder ASIC (Application-Specific Integrated Circuit) umfasst.

Die Steuer- und Auswertungseinheit ist bevorzugt dafür ausgebildet, für die Anpassung der Empfindlichkeit Komponenten im Empfangspfad des Lichtempfängers zwischen zwei Messungen und/oder innerhalb einer Messung anzupassen. Die Korrektur findet also direkt schon im Empfangspfad statt, vorzugsweise sind die Komponenten dort noch analog, auch wenn die spätere Auswertung digital ist. Eine Anpassung zwischen zwei Messungen ist vergleichsweise langsam und beruht auf Vorwissen durch feste Annahmen, Konfiguration oder frühere Messung. Es ist aber auch eine schnelle Anpassung innerhalb einer Messung auf den extrem kurzen Zeitskalen der Lichtlaufzeit vorstellbar. Die jeweils abgelaufene Zeit seit Aussenden eines Lichtpulses entspricht der Lichtlaufzeit bis zu einem Objekt in einem bestimmten Abstand. Deshalb kann mit der Signaldynamik zu diesem Abstand korrigiert werden.

Bei Anpassung zwischen zwei Messungen ist alternativ oder ergänzend zu einer Anpassung im Empfangspfad auch vorstellbar, im Sendepfad zu korrigieren, indem die optische Ausgangsleistung des Lichtsenders verstellt wird. Im Falle einer Erhöhung sind die Grenzen des Augenschutzes beziehungsweise die Laserschutzklasse einzuhalten.

Die Steuer- und Auswertungseinheit ist bevorzugt dafür ausgebildet, die Empfindlichkeit des Lichtempfängers, eines dem Lichtempfänger nachgeordneten Verstärkers und/oder eines dem Lichtempfänger nachgeordneten Schwellendetektors anzupassen. Das sind Komponenten des Empfangspfades, die sich für die Anpassung eignen. Die Empfindlichkeit des Lichtempfängers selbst wird beispielsweise über die an eine APD (Avalanche Photodiode) oder SPAD (Single-Photon Avalanche Diode) angelegte Spannung verändert. Außerdem kann ein Verstärkungsfaktor eines Verstärkers, welcher dem Lichtempfänger nachgeschaltet ist, beziehungsweise das Schwellwertkriterium eines Schwellendetektors verstellt werden.

Die Steuer- und Auswertungseinheit ist bevorzugt dafür ausgebildet, die Empfindlichkeit invers zu der Signaldynamik anzupassen. Dahinter steht die Vorstellung, dass der Sensor auf einen Wert Eins der Signaldynamik ausgelegt ist, etwa bei maximaler Reichweite, und die Variationen der Signaldynamik für andere Abstände durch die Invertierung ausgeglichen werden. Die Invertierung besteht bei Anwendung auf das Empfangssignal besonders bevorzugt in einer Division, wenn die Signaldynamik in der beschriebenen Weise auf den Wert Eins in ihrem Minimum normiert ist. Eine Schwelle wird entsprechend multipliziert, das ist ebenfalls eine inverse Anpassung der Empfindlichkeit, weil eine höhere Schwelle einer geringeren Empfindlichkeit entspricht. Die Signaldynamik wird effektiv nivelliert, sowohl bei einem entsprechend geglätteten digitalisierten Empfangssignal wie bei Anpassung von Schwellwertkriterien und dergleichen. Die Signaldynamik kann wie in allen Ausführungsformen mit nur wenigen Werten praktisch als gröbere oder feinere Stufenfunktion bis hin zu einer dicht gesampelten, einer interpolierenden oder einer analytischen Funktion vorliegen.

Die Steuer- und Auswertungseinheit ist bevorzugt dafür ausgebildet, nacheinander mehrere Sendelichtpulse auszusenden, die entsprechenden Empfangspulse mit mindestens einer Schwelle abzutasten und in einem Histogramm zu akkumulieren und die Lichtlaufzeit aus dem Histogramm zu bestimmen. Diese Ausführungsform arbeitet also mit einem Mehrpulsverfahren wie in der einleitend genannten EP 2 469 296 B1. Die Signaldynamik kann für die beitragenden Einzelmessungen und/oder im Histogramm korrigiert werden.

Der Sensor weist bevorzugt eine Frontscheibe, durch die der Lichtstrahl aus dem Sensor in den Überwachungsbereich austritt, sowie einen Verschmutzungssensor zur Bewertung der Lichtdurchlässigkeit der Frontscheibe auf, wobei die Empfindlichkeit unter Berücksichtigung der Lichtdurchlässigkeit angepasst wird. In dieser besonders vorteilhaften Ausführungsform wird eine Beeinträchtigung der Frontscheibe anders als im Stand der Technik nicht pauschal durch eine Empfindlichkeitsreserve berücksichtigt. Vielmehr wird die tatsächliche Transmissionsfähigkeit in die Korrektur der Signaldynamik der Frontscheibe einbezogen. Der Sicherheitsvorbehalt für eine Verschmutzung wird deutlich verringert oder ganz verzichtbar. Dadurch wird ein Sensor nicht unnötig empfindlich, wenn die Frontscheibe noch gar nicht verschmutzt ist, und umgekehrt kann unter Umständen ein schon recht stark verschmutzter Sensor, der herkömmlich abgeschaltet würde, noch weiter betrieben werden.

Der Sensor ist vorzugsweise als Sicherheitssensor, insbesondere Sicherheitslaserscanner ausgebildet und weist einen Sicherheitsausgang für die Ausgabe eines sicherheitsgerichteten Abschaltsignals auf. Ein Sicherheitssensor oder Sicherheitsscanner ist ein sicherer Sensor beziehungsweise sicherer Laserscanner im Sinne einer Sicherheitsnorm wie einleitend beschrieben und darf deshalb zum Personenschutz an Gefahrenquellen eingesetzt werden. Der Sicherheitsausgang, insbesondere ein OSSD (Output Signal Switching Device), ist dementsprechend sicher, etwa zweikanalig ausgeführt, und dient zur Einleitung einer sicherheitsgerichteten Maßnahme wie einem Notaus oder etwas allgemeiner dem Herstellen eines sicheren Zustands.

Die Steuer- und Auswertungseinheit ist bevorzugt für eine Schutzfeldauswertung ausgebildet, in der bestimmt wird, ob sich ein Objekt in mindestens einem konfigurierten Schutzfeld innerhalb des Überwachungsbereichs befindet, wobei die Empfindlichkeit in Abhängigkeit von dem konfigurierten Schutzfeld angepasst wird, insbesondere anhand eines Minimums der Signaldynamik innerhalb des konfigurierten Schutzfeldes. Damit ist die Sicherheitsauswertung bereits in den Sensor integriert, der direkt ein sicherheitsgerichtetes Abschaltsignal für eine Maschine oder eine zwischengeschaltete Sicherheitssteuerung bereitstellt.

Eine Schutzfeldauswertung ermöglicht, die Signaldynamik vorteilhafterweise in Abhängigkeit von den konfigurierten Schutzfeldern zu korrigieren. Denn in Abständen, in denen gar kein Schutzfeld liegt, muss der Sensor auch keine verlässliche Objektdetektion leisten. Statt sich also wie bisher an der maximalen Reichweite zu orientieren, wo das Minimum der Empfindlichkeit liegt, werden nun die von Schutzfeldern tatsächlich beanspruchten Abstände herangezogen, und darin wird das Minimum der Empfindlichkeit als Bezugspunkt verwendet. Insbesondere kann es genügen, nur die Grenzen des Schutzfeldes zu verwenden, da ein Schutzfeld zwangsläufig nur vom Rand her verletzt wird, und nochmals bevorzugt nur die fernste Schutzfeldgrenze, da dies effektiv der maximalen benötigten Reichweite entspricht.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Sicherheitslaserscanners
- Fig. 2: eine beispielhafte Darstellung einer Signaldynamik mit herkömmlicher konstanter Schwelle;
- Fig. 3: eine beispielhafte Darstellung einer Signaldynamik mit daran angepasster, abstandsabhängiger Schwelle;
- Fig. 4: eine beispielhafte Darstellung einer Signaldynamik mit daran anhand einer maximalen Schutzfeldausdehnung angepasster konstanter Schwelle; und
- Fig. 5: eine beispielhafte Darstellung einer Signaldynamik mit daran anhand einer maximalen Schutzfeldausdehnung angepasster, im Nahbereich ansteigender Schwelle.

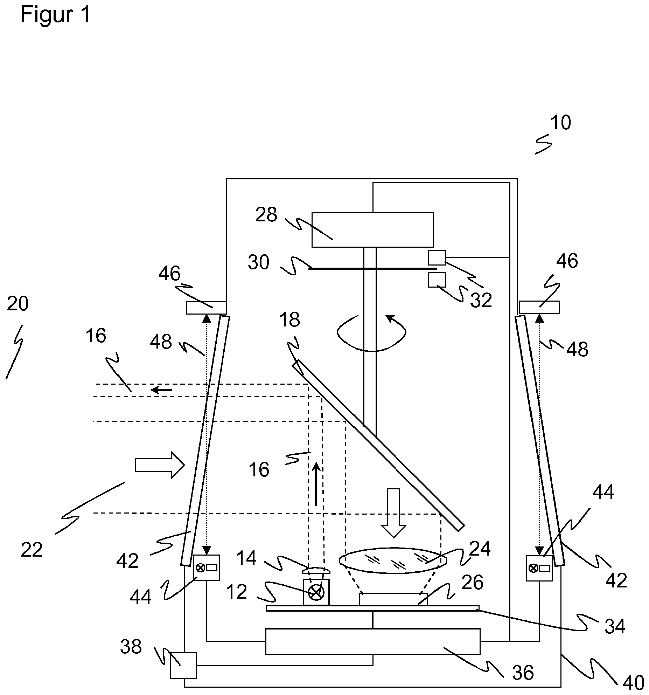

Figur 1 zeigt eine schematische Schnittdarstellung durch einen als Sicherheitslaserscanner ausgebildeten Sensor 10. Sicherheitslaserscanner bedeutet, dass ein Einsatz im Personenschutz möglich ist, also Maßnahmen entsprechend der einleitend genannten Normen getroffen sind, die einen unentdeckten Ausfall der Funktion entsprechend dem Sicherheitsniveau oder Performancelevel ausschließen.

Ein Lichtsender 12, beispielsweise mit einer Laserlichtquelle, erzeugt mit Hilfe einer Sendeoptik 14 einen Sendelichtstrahl 16, der an einer Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Sensor 10 zurück und wird dort über die Ablenkeinheit 18 und mittels einer Empfangsoptik 24 von einem Lichtempfänger 26 detektiert, beispielsweise einer oder mehreren Photodioden, APDs (Avalanche Photo Diode) oder SPADs (Single-Photon Avalanche Diode).

Die Ablenkeinheit 18 ist in dieser Ausführungsform als Drehspiegel ausgestaltet, die durch Antrieb eines Motors 28 kontinuierlich rotiert. Die jeweilige Winkelstellung des Motors 28 beziehungsweise der Ablenkeinheit 18 wird über einen Encoder erkannt, der beispielsweise eine Codescheibe 30 und eine Gabellichtschranke 32 umfasst. Der von dem Lichtsender 12 erzeugte Sendelichtstrahl 16 überstreicht somit den durch die Rotationsbewegung erzeugten Überwachungsbereich 20. Anstelle eines Drehspiegels ist auch möglich, die Ablenkeinheit 18 als rotierenden Optikkopf auszubilden, in dem Lichtsender 12 und/oder Lichtempfänger 26 und möglicherweise weitere Elemente untergebracht sind.

Auch die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. In der Ausführungsform nach Figur 1 liegen Lichtsender 12 und Lichtempfänger 26 vorzugsweise sehr nahe beieinander, um im Nahbereich ein ausreichendes Empfangssignal zu erhalten, und sind auf einer gemeinsamen Leiterkarte 34 untergebracht. Auch das ist nur ein Beispiel, denn es können eigene Leiterkarten sowie andere Anordnungen beispielsweise mit mehr Abstand oder einem gegenseitigen Höhenversatz vorgesehen sein. Es sind auch Sicherheitslaserscanner in einer koaxialen Anordnung bekannt, also mit gemeinsamer optischer Achse von Lichtsender 12 und Lichtempfänger 26.

Wird nun von dem Lichtempfänger 26 remittiertes Licht 22 aus dem Überwachungsbereich 20 empfangen, so kann aus der von dem Encoder 30, 32 gemessenen Winkelstellung der Ablenkeinheit 18 auf die Winkellage des Objektes in dem Überwachungsbereich 20 geschlossen werden. Zusätzlich wird vorzugsweise die Lichtlaufzeit von Aussenden eines Lichtsignals bis zu dessen Empfang nach Reflexion an dem Objekt in dem Überwachungsbereich 20 ermittelt und unter Verwendung der Lichtgeschwindigkeit auf die Entfernung des Objektes von dem Sensor 10 geschlossen. Dazu wird vorzugsweise ein Pulslaufzeitverfahren eingesetzt, also der Sendelichtstrahl 16 mit kurzen Pulsen moduliert und die Lichtlaufzeit zwischen Aussenden und Empfangen eines Pulses bestimmt. Dabei sind Einzelpulsverfahren und Pulsmittelungsverfahren möglich.

Eine Steuer- und Auswertungseinheit 36 ist mit dem Lichtsender 12, dem Lichtempfänger 26, dem Motor 28 und dem Encoder 32 verbunden. Sie steuert den Messablauf, moduliert dafür unter anderem den Sendelichtstrahl, bestimmt die Lichtlaufzeit und erhält Informationen über die Winkelstellung. Somit stehen über den Winkel und die Entfernung zweidimensionale Polarkoordinaten aller Objekte in dem Überwachungsbereich 20 zur Verfügung. In sicherheitstechnischer Anwendung prüft die Steuer- und Auswertungseinheit 36, ob ein unzulässiges Objekt in einen innerhalb des Überwachungsbereichs 20 festgelegten Schutzbereich eingreift. Ist das der Fall, wird über einen Sicherheitsausgang 38 (OSSD, Output Signal Switching Device) ein Absicherungssignal an eine überwachte Gefahrenquelle, beispielsweise eine Maschine ausgegeben. Es kann zusätzliche nicht dargestellte Schnittstellen zur Ausgabe von rohen oder vorverarbeiteten Messdaten oder beispielsweise zum Parametrieren des Sensors 10 geben.

Alle genannten Funktionskomponenten sind in einem Gehäuse 40 angeordnet, das im Bereich des Lichtaus- und Lichteintritts eine Frontscheibe 42 aufweist. Über den Umfang der Frontscheibe 42 verteilt sind lichtschrankenartige Detektoren angeordnet, um deren Transmissionsfähigkeit zu prüfen. In Figur 1 weisen diese Detektoren jeweils ein nur ganz grob dargestelltes Sender-/Empfängerpaar 44 im Inneren des Gehäuses 40 und einen Reflektor 46 außerhalb des Gehäuses 40 auf. Ein Testlichtstrahl 48 durchdringt daher die Frontscheibe 42, in diesem Fall sogar zweifach, und der im Sender-/Empfängerpaar 44 registrierte Pegel nimmt je nach Verunreinigungsgrad der Frontscheibe 42 ab. Die Steuer- und Auswertungseinheit 36 kann daher mit Hilfe der Sender-/Empfängerpaare 44 die Transmissionsfähigkeit der Frontscheibe 42 bewerten. Dies ist nur ein Beispiel der Verschmutzungsmessung für die Frontscheibe 42, andere an sich bekannte Anordnungen sind ebenso möglich.

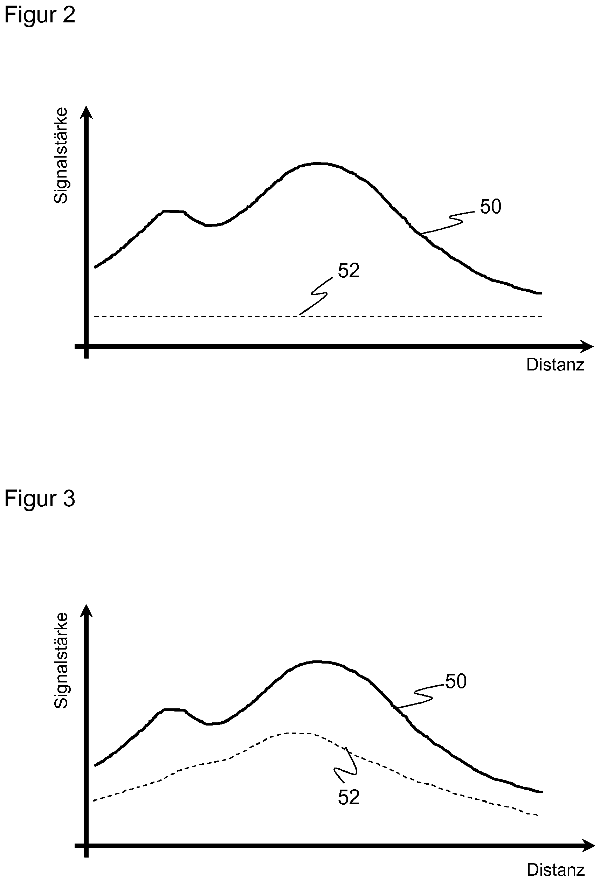

Figur 2 zeigt einen beispielhaften Verlauf einer Signaldynamik 50 des Sensors 10. Die Signaldynamik wurde einleitend erläutert, das soll hier nicht wiederholt werden. Kurz zusammengefasst ist die Signaldynamik eine Funktion der relativen Signalstärke in Abhängigkeit von dem Abstand zu dem Sensor 10. Sie wird üblicherweise in der maximalen Reichweite des Sensors 10 auf den Wert Eins normiert. In einem mittleren Abstandsbereich entsteht ein Maximum durch die quadratische Abnahme der Signalstärke mit größer werdendem Abstand einerseits und das Auswandern beziehungsweise nur teilweise Auftreffen des Lichtflecks auf dem Lichtempfänger 26 mit kleiner werdendem Abstand andererseits. Hinzu kommen Effekte höherer Ordnung, die hier zu einem weiteren Maximum führen, beispielsweise durch kompliziertere Abbildungen der Empfangsoptik 24, die insbesondere verschiedene Entfernungszonen aufweisen kann.

Die Signaldynamik 50 kann für einen bestimmten Sensor 10 vermessen werden, sei es bei der Optikentwicklung, bei der Herstellung oder in einem Kalibrier- beziehungsweise Einlernvorgang am Betriebsort, indem ein Objekt unter sonst gleichen Bedingungen in verschiedenen Abständen präsentiert wird. Alternativ oder zusätzlich wird sie aus Simulationen oder optischen Überlegungen theoretisch bestimmt. Jedenfalls ist der Verlauf der Signaldynamik 50 für die folgenden Betrachtungen bekannt, wobei eine Näherung durch Kenntnis nur für einige Abstandswerte genügen kann. Dabei kann die Signaldynamik 50 selbst in der Steuer- und Auswertungseinheit 36 gespeichert sein, oder es werden dort nur die daraus abgeleiteten Größen und Vorgehensweisen abgelegt.

Herkömmlich arbeitet ein Laserscanner mit einer konstanten Schwelle 52, die sich an der maximalen Reichweite orientiert, weil dort die Empfindlichkeit am geringsten ist, die Signaldynamik also ihr Minimum annimmt. Das bedeutet aber, dass eine Objekterfassung in einem Abstand, der dem Maximum der Signaldynamik 50 entspricht, mit einem Vielfachen der erforderlichen Empfindlichkeit detektiert wird. Dadurch können selbst kleine Störungen, wie Regentropfen, Staub oder Insekten, als Objekt erfasst werden.

Figur 3 zeigt nochmals den Verlauf der Signaldynamik 50, nun jedoch gemeinsam mit einem daran gemäß einer Ausführungsform der Erfindung angepassten, abstandsabhängigen Verlauf der Schwelle 52. Die Signaldynamik 50 wird damit bei der Einstellung der Empfindlichkeit berücksichtigt. Die Schwelle 52 ist nun eine Funktion des Abstands. Die Schwelle 52 folgt vorzugsweise zumindest grob dem Verlauf der Signaldynamik 50. Die Korrelation kann aber unterschiedliche Ausprägungen haben. So wird beispielsweise das kleinere Nebenmaximum der Signaldynamik 50 von der Schwelle 52 weitgehend ignoriert. Die Übereinstimmung im Verlauf von Signaldynamik 50 und Schwelle 52 kann stärker oder schwächer sein. Insbesondere ist ein stufenartiger Verlauf der Schwelle 52 mit auch nur wenigen angepassten Werten beispielsweise für kleine Abstände, im Bereich des Maximums der Signaldynamik 50 und für große Abstände denkbar.

Es gibt verschiedene Möglichkeiten, wie die Steuer- und Auswertungseinheit 36 die abstandsabhängige Schwelle 52 anwendet. In einer Ausführungsform wird der Abstand zu einem Objekt vermessen. Anschließend wird die gemessene Signalstärke mit der minimalen Signalstärke für diesen Abstand verglichen, wobei die minimale Signalstärke aus der Signaldynamik 50 abgeleitet ist. Das entspricht einem Schwellwertvergleich mit der abstandsabhängigen Schwelle 52 im gemessenen Abstand. Erreicht die gemessene Signalstärke nicht die geforderte Signalstärke, so wird die Messung als ungültig angesehen beziehungsweise verworfen. Es ist also nicht länger so, dass der Sensor 10 im Bereich höherer Signaldynamik 50, besonders in deren Maximum, empfindlicher misst. Dadurch werden Störeinflüsse wirkungsvoll unterdrückt.

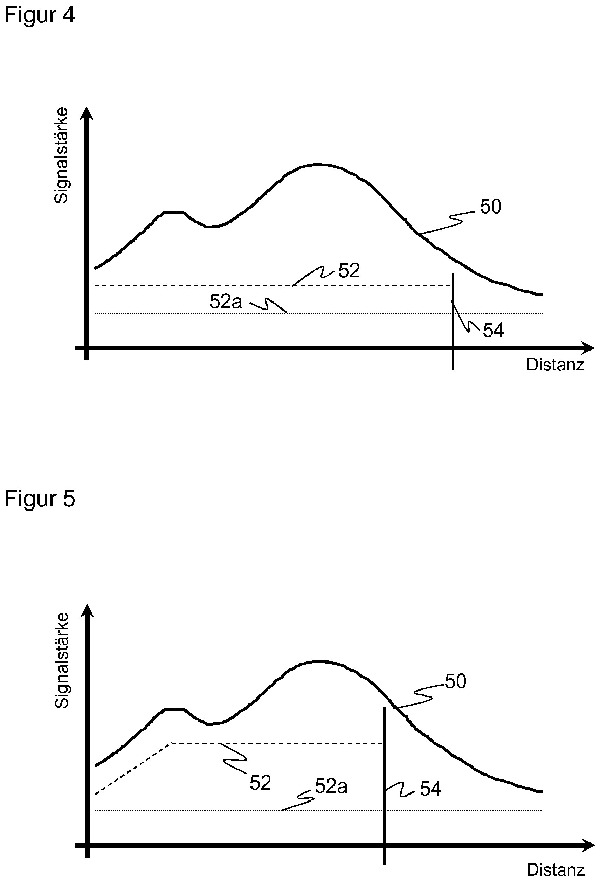

Es ist nicht zwingend erforderlich, dass ein Abstandsmesswert zur Verfügung steht, um den passenden Wert der Signaldynamik 50 beziehungsweise der Schwelle 52 zu diesem Abstand auszulesen. Zunächst kann die Messung auch durch anderes Vorwissen ersetzt werden, etwa einen früheren Abstandswert oder einen konfigurierten interessierenden Bereich. Letzteres wird später unter Bezugnahme auf die Figuren 4 und 5 am Beispiel von Schutzfeldern noch näher erläutert. In einer weiteren Ausführungsform findet eine schnelle Anpassung auf den Zeitskalen der Lichtlaufzeit statt. Mit dem Aussenden eines Sendelichtpulses wird die Schwelle 52 kontinuierlich angepasst. Wann immer tatsächlich ein Objekt angetastet wird, ist die Schwelle 52 dann sozusagen vorsorglich gerade auf die passende Entfernung eingestellt. Eine Schwelle 52 kann dann tatsächlich über einen analogen Schwellendetektor implementiert sein, der entsprechend dynamisch angepasst wird.

Alternativ wird die Schwelle 52 erst in nach Digitalisierung des Empfangssignals in der Steuer- und Auswertungseinheit 36 angewandt. Praktisch gleichwirkend ist eine Kompensation des digitalisierten Empfangssignals mit der Signaldynamik 50. Danach liegt ein Empfangssignal vor, als wäre die Signaldynamik 50 flach, und folglich kann dann die Schwelle 52 auch wieder konstant sein. Effektiv ist das weiterhin eine abstandsabhängige Schwelle 52.

Neben einer Schwelle 52 gibt es für eine Anpassung der Empfindlichkeit des Sensors 10 entsprechend der Signaldynamik 50 verschiedene alternative oder ergänzende Möglichkeiten, die einzeln oder kombiniert genutzt werden können. Statt das Empfangssignal im Nachhinein mit der Signaldynamik 50 zu glätten, kann auch schon während dessen Aufzeichnung eine entsprechende Verstärkungsanpassung erfolgen. Die Verstärkung im Empfangspfad lässt sich schon am Lichtempfänger 26 selbst verändern, etwa eine Vorspannung einer APD, oder über den Verstärkungsfaktor eines nachgeordneten Verstärkers. Weiter ist vorstellbar, die optische Ausgangsleistung des Lichtsenders 12 zu erhöhen. Dabei sollte beachtet werden, dass eine höhere Laserleistung nicht zu einer Abweichung von der qualifizierten Laserschutzklasse führt.

Die Einstellung der Empfindlichkeit kann somit auf verschiedenste Weise erfolgen, wie sehr schnell schon innerhalb einer Messung oder langsamer im Nachhinein beziehungsweise zwischen zwei Messungen sowie durch eine rein softwareseitige Anpassung und/oder durch Anpassung von Komponenten des Empfangspfades.

Die Figur 4 zeigt ein weiteres Mal die Signaldynamik 50 nun im Zusammenhang mit einer Schwelle 52, die einen interessierenden Bereich berücksichtigt, insbesondere die jeweils konfigurierten oder einprogrammierten Schutzfelder. Häufig wird die maximale Reichweite des Sensors 10 in der konkreten Anwendung gar nicht ausgenutzt. In Figur 4 ist als Beispiel eine fernste Grenze 54 eines Schutzfeldes eingezeichnet, die deutlich vor der maximalen Reichweite liegt.

Unter diesen Bedingungen kann die Empfindlichkeitsanpassung sogar über eine konstante Schwelle 52 erfolgen, die aber höher ist als bei herkömmlicher Auslegung einer nicht angepassten Schwelle 52a anhand der maximalen Reichweite. Die Schwelle 52 ist an die Signaldynamik 50 im Abstand der fernsten Grenze 54 angepasst. Eine konstante Schwelle 52 oder etwas allgemeiner eine globale Absenkung der Empfindlichkeit ist besonders einfach zu implementieren und anzuwenden. Die Sicherheit bleibt gewährleistet, wobei zu beachten ist, dass ein Schutzfeld immer vom Rand her verletzt wird. Die Einstellung der Empfindlichkeit kann im Anschluss an die Schutzfeldkonfiguration automatisch durchgeführt werden. Dazu stehen alle genannten Varianten zur Verfügung, einschließlich software- oder hardwareseitiger Anpassung der Schwelle 52, Veränderung der Verstärkung im Empfangspfad und Verringerung der Ausgangsleistung des Lichtsenders 12.

Eine konstante Schwelle 52 in Anpassung an die Signaldynamik 50 an der fernsten Grenze 54 ist besonders vorteilhaft und einfach. Die Anpassung kann sich etwas allgemeiner nicht an der fernsten Grenze 54, sondern an dem Minimum der Signaldynamik 50 für alle Abstände eines interessierenden Bereichs oder Schutzfelds orientieren, wobei das Minimum oft allein durch die fernste Grenze 54, ansonsten regelmäßig zumindest durch die nächste und fernste Grenze bestimmt ist. Außerdem muss die Schwelle 52 auch hier nicht konstant sein, sondern sie passt sich der Signaldynamik 50 wie oben an, jedoch eingeschränkt auf die von Schutzfeldern abgedeckten Abstände.

Figur 5 ist eine Darstellung ähnlich Figur 4, wobei nun aber die fernste Grenze 54 in einem Bereich der Signaldynamik 50 liegt, wo diese größere Werte annimmt als im Nahbereich. Deshalb wäre eine Anpassung allein an die Signaldynamik 50 an der fernsten Grenze 54 nicht ausreichend, weil nun die Empfindlichkeit im Nahbereich die geringste ist, nicht mehr an der fernsten Grenze 54. Das kann berücksichtigt werden, indem die Schwelle 52 insgesamt an den Wert beim kürzesten relevanten Abstand angepasst wird. In Figur 5 wird stattdessen im Nahbereich keine konstante Schwelle 52 gewählt, sondern eine anwachsende Schwelle 52. Das dargestellte linear mit einem entfernungsabhängigen Faktor anwachsende Verhalten der Schwelle 52 lässt sich besonders einfach handhaben, ist aber nicht einschränkend zu verstehen. Die Schwelle 52 kann der Signaldynamik 50 im Nahbereich oder insgesamt auch gröber oder feiner auf andere Weise folgen.

Ein weiterer, nicht in den Figuren gezeigter Aspekt ist die Einbeziehung der Transmissionsmessung der Frontscheibe 42 mit Hilfe der Sender-/Empfängerpaare 44. Der Sensor 10 darf nicht mehr betrieben werden, wenn die Frontscheibe 42 zu stark verunreinigt ist, und geht dann dauerhaft in den Absicherungszustand. Damit das nicht zu schnell geschieht, wird herkömmlich eine Empfindlichkeitsreserve von beispielsweise 30% vorgehalten. In einer weiteren Ausführungsform der Erfindung berücksichtigt anstelle dieser Empfindlichkeitsreserve die jeweils angepasste Empfindlichkeit das Ergebnis der Transmissionsmessung.

Solange also Frontscheibe 42 sauber ist, gibt es vorzugsweise keine Empfindlichkeitsreserve. Mit zunehmender Verunreinigung wird die Empfindlichkeit entsprechend der Anpassung an die Signaldynamik 50 nicht mehr so stark abgesenkt beziehungsweise die Schwelle 52 nicht mehr so stark erhöht, um die Lichtverluste an der Frontscheibe 42 auszugleichen. Die Sender-/Empfängerpaare 44 liefern ohnehin die notwendige Information, in welchem Maße das erforderlich ist. Sicherheitskritisch kann das nicht sein, weil sich die Empfindlichkeit gegenüber dem Anfangszustand nur erhöht.

## Patentansprüche

1. Optoelektronischer Sensor (10), insbesondere Laserscanner, mit Korrektur der Signaldynamik (50), d.h. der relativen Empfangsleistung in Abhängigkeit vom Abstand eines angetasteten Objekts, und zur Erfassung des Objekts in einem Überwachungsbereich (20), mit einem Lichtsender (12) zum Aussenden eines Lichtstrahls (16) in den Überwachungsbereich (20), einem Lichtempfänger (26) zum Erzeugen eines Empfangssignals aus dem von dem Objekt remittierten Lichtstrahl (22), einer beweglichen Ablenkeinheit (18) zur periodischen Ablenkung des Lichtstrahls (16, 22), um im Verlauf der Bewegung den Überwachungsbereich (20) abzutasten, und mit einer Steuer- und Auswertungseinheit (36), die dafür ausgebildet ist, das Objekt durch eine Bewertung des Empfangssignals mit einem Schwellwert (52) zu erfassen, die Lichtlaufzeit zwischen Aussenden und Empfang des Lichtstrahls (16, 22) und daraus die Entfernung zu dem Objekt zu bestimmen, die durch Messung, Simulation und/oder optische Überlegungen bestimmte Signaldynamik (50) einschließlich eines Maximums in einem mittleren Abstandsbereich zu speichern und die Signaldynamik (50) durch Anpassung der Empfindlichkeit des Sensors (10) zu korrigieren, wobei in der Steuer- und Auswertungseinheit (36) die Signaldynamik (50) selbst gespeichert ist oder nur daraus abgeleitete Größen abgelegt werden,
**dadurch gekennzeichnet,**
**dass** die Steuer- und Auswertungseinheit (36) dafür ausgebildet ist, den Schwellwert (52) anhand der gespeicherten Signaldynamik (50) abstandsabhängig anzupassen.

2. Sensor (10) nach Anspruch 1,
wobei die Steuer- und Auswertungseinheit (36) dafür ausgebildet ist, das Empfangssignal zu digitalisieren und die jeweiligen Abtastwerte entfernungsabhängig anhand der Signaldynamik (50) zu korrigieren.

3. Sensor (10) nach einem der Ansprüche 1 oder 2,
wobei die Steuer- und Auswertungseinheit (36) dafür ausgebildet ist, die Anpassung der Empfindlichkeit durch Anpassungen der Auswertung vorzunehmen.

4. Sensor (10) nach einem der vorhergehenden Ansprüche,
wobei die Steuer- und Auswertungseinheit (36) dafür ausgebildet ist, für die Anpassung der Empfindlichkeit analoge Komponenten im Empfangspfad des Lichtempfängers (26) zwischen zwei Messungen und/oder innerhalb einer Messung anzupassen.

5. Sensor (10) nach Anspruch 4,
wobei die Steuer- und Auswertungseinheit (36) dafür ausgebildet ist, die Empfindlichkeit des Lichtempfängers (26), eines dem Lichtempfänger (26) nachgeordneten Verstärkers und/oder eines dem Lichtempfänger (26) nachgeordneten Schwellendetektors anzupassen.

6. Sensor (10) nach einem der vorhergehenden Ansprüche,
wobei die Steuer- und Auswertungseinheit (36) dafür ausgebildet ist, die Empfindlichkeit invers zu der gespeicherten Signaldynamik (50) anzupassen.

7. Sensor (10) nach einem der vorhergehenden Ansprüche,
wobei die Steuer- und Auswertungseinheit (36) dafür ausgebildet ist, nacheinander mehrere Sendelichtpulse (16) auszusenden, die entsprechenden Empfangspulse mit dem Schwellwert (52) abzutasten und in einem Histogramm zu akkumulieren und die Lichtlaufzeit aus dem Histogramm zu bestimmen.

8. Sensor (10) nach einem der vorhergehenden Ansprüche,
der eine Frontscheibe (42), durch die der Lichtstrahl (16) aus dem Sensor (10) in den Überwachungsbereich (20) austritt, sowie einen Verschmutzungssensor (44, 46) zur Bewertung der Lichtdurchlässigkeit der Frontscheibe (42) aufweist, und wobei die Empfindlichkeit unter Berücksichtigung der Lichtdurchlässigkeit angepasst wird.

9. Sensor (10) nach einem der vorhergehenden Ansprüche,
der als Sicherheitssensor, insbesondere Sicherheitslaserscanner, ausgebildet ist und einen Sicherheitsausgang (38) für die Ausgabe eines sicherheitsgerichteten Abschaltsignals aufweist.

10. Sensor (10) nach Anspruch 9,
wobei die Steuer- und Auswertungseinheit (36) für eine Schutzfeldauswertung ausgebildet ist, in der bestimmt wird, ob sich das Objekt in mindestens einem konfigurierten Schutzfeld innerhalb des Überwachungsbereichs (20) befindet, und wobei die Empfindlichkeit in Abhängigkeit von dem konfigurierten Schutzfeld angepasst wird, insbesondere anhand eines Minimums der Signaldynamik (50) innerhalb des konfigurierten Schutzfeldes.

11. Verfahren zur Erfassung eines Objektes in einem Überwachungsbereich (20), bei dem ein Lichtstrahl (16) in den Überwachungsbereich (20) ausgesandt und der an dem Objekt remittierte Lichtstrahl (22) wieder empfangen wird, wobei der Lichtstrahl (16, 22) mit einer beweglichen Ablenkeinheit (18) periodisch abgelenkt wird, um im Verlauf der Bewegung den Überwachungsbereich (20) abzutasten, das Objekt durch eine Bewertung des Empfangssignals mit einem Schwellwert (52) erfasst wird, die Lichtlaufzeit zwischen Aussenden und Empfang des Lichtstrahls (16, 22) und daraus die Entfernung zu dem Objekt bestimmt wird und eine Signaldynamik (50), d.h. die relative Empfangsleistung in Abhängigkeit vom Abstand des angetasteten Objekts, einschließlich eines Maximums in einem mittleren Abstandsbereich durch Messung, Simulation und/oder optische Überlegungen bestimmt wird und die Signaldynamik (50) durch Anpassung der Empfindlichkeit korrigiert wird, wobei die Signaldynamik (50) selbst gespeichert wird oder nur daraus abgeleitete Größen abgelegt werden, **dadurch gekennzeichnet,**
**dass** der Schwellwert (52) anhand der gespeicherten Signaldynamik (50) abstandsabhängig angepasst wird.

## Claims

1. An optoelectronic sensor (10), in particular a laser scanner, using correction of the signal dynamics (50), i.e. of the relative reception power as a function of the distance of a scanned object, and for detecting the object in a monitoring area (20), the sensor (10) comprising a light transmitter (12) for transmitting a light beam (16) into the monitoring area (20), a light receiver (26) for generating a reception signal from the remitted light beam (22) remitted by the object, a movable deflection unit (18) for periodically deflecting the light beam (16, 22) in order to scan the monitoring area (20) in the course of the movement, and a control and evaluation unit (36) configured to detect the object by evaluating the received signal with a threshold value (52), to determine the light time of flight between transmission and reception of the light beam (16, 22) and thus the distance to the object, to store the signal dynamics determined by measurement, simulation and/or optical considerations, and to correct the signal dynamics (50) by adapting the sensitivity of the sensor (10), the control and evaluation unit (36) storing the signal dynamics (50) as such or only variables derived therefrom, **characterized in that** the control and evaluation unit (36) is configured to adapt the threshold value (52) as a function of distance on the basis of the stored signal dynamics (50).

2. The sensor (10) according to claim 1,
wherein the control and evaluation unit (36) is configured to digitize the received signal and to correct the respective sampling values in a distance-dependent manner on the basis of the signal dynamics (50).

3. The sensor (10) according to claim 1 or 2,
wherein the control and evaluation unit (36) is configured to perform the adjustment of the sensitivity by adjustments of the evaluation.

4. The sensor (10) according to any of the preceding claims,
wherein the control and evaluation unit (36) is configured to adapt analog components in the reception path of the light receiver (26) between two measurements and/or within a measurement for the adaptation of the sensitivity.

5. The sensor (10) according to claim 4,
wherein the control and evaluation unit (36) is configured to adjust the sensitivity of the light receiver (26), of an amplifier arranged downstream of the light receiver (26) and/or of a threshold detector arranged downstream of the light receiver (26).

6. The sensor (10) according to any of the preceding claims,
wherein the control and evaluation unit (36) is configured to adjust the sensitivity inversely to the stored signal dynamics (50).

7. The sensor (10) according to any of the preceding claims,
wherein the control and evaluation unit (36) is configured to successively transmit a plurality of transmitted light pulses (16), to sample the corresponding received pulses with the threshold value (52) and to accumulate them in a histogram, and to determine the light time of flight from the histogram.

8. The sensor (10) according to any of the preceding claims,
comprising a front window (42) through which the light beam (16) exits the sensor (10) into the monitoring area (20), and a contamination sensor (44, 46) for evaluating the light transmittance of the front window (42), and wherein the sensitivity is adjusted taking into account the light transmittance.

9. The sensor (10) according to any of the preceding claims,
that is configured as a safety sensor, in particular a safety laser scanner, and comprises a safety output (38) for outputting a safety-related switch-off signal.

10. The sensor (10) according to claim 9,
wherein the control and evaluation unit (36) is configured for a protective field evaluation wherein it is determined whether the object is located in at least one configured protective field within the monitoring area (20), and wherein the sensitivity is adapted as a function of the configured protective field, in particular on the basis of a minimum of the signal dynamics (50) within the configured protective field.

11. A method for detecting an object in a monitoring area (20), wherein a light beam (16) is transmitted into the monitoring area (20) and the remitted light beam (22) remitted at the object is received again, the light beam (16, 22) is periodically deflected by a movable deflection unit (18) in order to scan the monitoring area (20) in the course of the movement, the object is detected by evaluating the received signal with a threshold value (52), the light time of flight between transmission and reception of the light beam (16, 22) and, from that, the distance to the object is determined, and signal dynamics (50), i.e. the relative received power as a function of the distance of the scanned object, are determined including a maximum in a mean distance range by measurement, simulation and/or optical considerations, and the signal dynamics (50) are corrected by adapting the sensitivity, the signal dynamics (50) as such or only variables derived therefrom being stored,
**characterized in that** the threshold value (52) is adapted as a function of distance on the basis of the stored signal dynamics (50).

## Revendications

1. Capteur optoélectronique (10), en particulier scanner laser, assurant une correction de la dynamique de signal (50), c'est-à-dire une correction de la puissance de réception relative en fonction de la distance d'un objet balayé, et destiné à détecter ledit objet dans une zone à surveiller (20), comportant un émetteur de lumière (12) pour émettre un faisceau lumineux (16) dans la zone à surveiller (20), un récepteur de lumière (26) pour générer un signal de réception à partir du faisceau lumineux (22) renvoyé de l'objet, une unité de déviation mobile (18) pour dévier périodiquement le faisceau lumineux (16, 22), afin de balayer la zone à surveiller (20) au cours du mouvement, et comportant une unité de commande et d'évaluation (36) qui est réalisée pour détecter l'objet par une évaluation du signal de réception avec une valeur seuil (52), pour déterminer le temps de vol de lumière entre l'émission et la réception du faisceau lumineux (16, 22) et pour en déterminer la distance par rapport à l'objet, pour mémoriser la dynamique de signal (50) déterminée par mesure, par simulation et/ou par des considérations optiques, y compris un maximum dans une plage de distance moyenne, et pour corriger la dynamique de signal (50) par adaptation de la sensibilité du capteur (10), la dynamique de signal (50) elle-même étant mémorisée dans l'unité de commande et d'évaluation (36) ou seules des grandeurs qui en sont dérivées y étant stockées,
**caractérisé en ce que**
l'unité de commande et d'évaluation (36) est réalisée pour adapter la valeur seuil (52) en fonction de la distance sur la base de la dynamique de signal (50) mémorisée.

2. Capteur (10) selon la revendication 1,
dans lequel l'unité de commande et d'évaluation (36) est réalisée pour numériser le signal de réception et pour corriger les valeurs de balayage respectives en fonction de la distance sur la base de la dynamique de signal (50).

3. Capteur (10) selon l'une des revendications 1 ou 2,
dans lequel l'unité de commande et d'évaluation (36) est réalisée pour procéder à l'adaptation de la sensibilité par des adaptations de l'évaluation.

4. Capteur (10) selon l'une des revendications précédentes,
dans lequel, pour l'adaptation de la sensibilité, l'unité de commande et d'évaluation (36) est réalisée pour adapter, entre deux mesures et/ou au sein d'une mesure, des composants analogiques dans le chemin de réception du récepteur de lumière (26).

5. Capteur (10) selon la revendication 4,
dans lequel l'unité de commande et d'évaluation (36) est réalisée pour adapter la sensibilité du récepteur de lumière (26), d'un amplificateur placé en aval du récepteur de lumière (26), et/ou d'un détecteur de seuil placé en aval du récepteur de lumière (26).

6. Capteur (10) selon l'une des revendications précédentes,
dans lequel l'unité de commande et d'évaluation (36) est réalisée pour adapter la sensibilité inversement à la dynamique de signal (50) mémorisée.

7. Capteur (10) selon l'une des revendications précédentes,
dans lequel l'unité de commande et d'évaluation (36) est réalisée pour émettre successivement plusieurs impulsions lumineuses d'émission (16), pour échantillonner les impulsions de réception correspondantes avec la valeur seuil (52) et pour les accumuler dans un histogramme, et pour déterminer le temps de vol de lumière à partir de l'histogramme.

8. Capteur (10) selon l'une des revendications précédentes, comprenant une vitre frontale (42) à travers laquelle le faisceau lumineux (16) sort du capteur (10) vers la zone à surveiller (20), ainsi qu'un capteur d'encrassement (44, 46) pour évaluer la translucidité de la vitre frontale (42), la sensibilité étant adaptée en tenant compte de la translucidité.

9. Capteur (10) selon l'une des revendications précédentes,
réalisé sous forme de capteur de sécurité, en particulier sous forme de scanner laser de sécurité, et présentant une sortie de sécurité (38) pour délivrer un signal de coupure sécurisé.

10. Capteur (10) selon la revendication 9,
dans lequel l'unité de commande et d'évaluation (36) est réalisée pour une évaluation du champ de protection permettant de déterminer si ledit objet se trouve dans au moins un champ de protection configuré à l'intérieur de la zone à surveiller (20), et
la sensibilité est adaptée en fonction du champ de protection configuré, en particulier sur la base d'un minimum de la dynamique de signal (50) à l'intérieur du champ de protection configuré.

11. Procédé de détection d'un objet dans une zone à surveiller (20), dans lequel un faisceau lumineux (16) est émis dans la zone à surveiller (20) et le faisceau lumineux (22) renvoyé de l'objet est reçu, le faisceau lumineux (16, 22) étant dévié périodiquement avec une unité de déviation mobile (18), afin de balayer la zone à surveiller (20) au cours du mouvement, l'objet est détecté par une évaluation du signal de réception avec une valeur seuil (52), le temps de vol de lumière entre l'émission et la réception du faisceau lumineux (16, 22) et, à partir de celui-ci, la distance à l'objet sont déterminés, et une dynamique de signal (50), c'est-à-dire la puissance de réception relative en fonction de la distance de l'objet balayé, y compris un maximum dans une plage de distance moyenne, est déterminée par mesure, par simulation et/ou par des considérations optiques, et la dynamique de signal (50) est corrigée par adaptation de la sensibilité, la dynamique de signal (50) elle-même étant mémorisée ou seules des grandeurs qui en sont dérivées étant stockées,
**caractérisé en ce que**
la valeur seuil (52) est adaptée en fonction de la distance sur la base de la dynamique de signal (50) mémorisée.
